# EUROPEAN PATENT APPLICATION

(11) **EP 4 827 232 A1**
(43) Date of publication of application: **21.10.2026**
(21) Application number: 25738977.5
(22) Date of filing: 09.01.2025
(51) Int. Cl.: H04W 76/18, H04W 76/22, H04W 8/02, H04W 24/08, H04L 41/0677

(54) **SESSION MANAGEMENT METHOD AND DEVICE FOR USER PLANE PATH FAILURE HANDLING IN WIRELESS COMMUNICATION SYSTEM**

(30) Priority: 12.01.2024 KR 20240005641; 08.11.2024 KR 20240158199
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); BAE, Jaehyeon, Suwon-si Gyeonggi-do 16677 (KR); LEE, Jicheol, Suwon-si Gyeonggi-do 16677 (KR)
(74) Representative: Gulde & Partner
(86) International application number: PCT/KR2025/000468
(87) International publication number: WO 2025/150904

(57) **Abstract**

The present disclosure provides a method performed by a first session management function (SMF) entity belonging to a home public land mobile network (HPLMN) in a wireless communication system, the method comprising the steps of: receiving, from a first user plane function (UPF) entity belonging to the HPLMN and disposed close to a visited region of a terminal, a first message for notifying a user plane path failure between a first UPF and a second UPF entity belonging to a visited public land mobile network (VPLMN) of the visited region; and transmitting, to a second SMF entity belonging to the VPLMN, a second message for requesting the release of a protocol data unit (PDU) session associated with the user plane path.

## Description

### [Technical Field]

The embodiments of the disclosure relate to a wireless communication system and, more specifically, the embodiments propose a session management method for responding to a failure occurring on a user plane path.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The embodiments of the disclosure may aim to provide a session management method and device for responding to a failure that occurs on a user plane path.

### [Solution to Problem]

According to embodiments of the disclosure, a method, performed by a first session management function (SMF) entity belonging to a home public land mobile network (HPLMN) in a wireless communication system, may include receiving, from a first user plane function (UPF) entity belonging to the HPLMN and deployed close to a visited region of a terminal, a first message for notifying of a failure of a user plane path between the first UPF and a second UPF entity belonging to a visited public land mobile network (VPLMN) in the visited region, and transmitting, to a second SMF entity belonging to the VPLMN, a second message for requesting a release of a protocol data unit (PDU) session associated with the user plane path.

### [Advantageous Effects of Invention]

The method and device according to the embodiments of the disclosure may perform session management to respond to a failure that occurs on a user plane path configured to transmit service traffic of a roaming UE to a data center with a short transmission distance.

### [Brief Description of Drawings]

FIG. 1 illustrates a structure of a wireless communication system according to an embodiment of the disclosure.
FIG. 2 is a diagram illustrating examples of user plane configuration and failure occurrence according to embodiments of the disclosure.
FIG. 3 is a diagram illustrating user plane configuration for an HR PDU session according to embodiments of the disclosure.
FIG. 4 is a diagram illustrating a method for detecting user plane failure occurrence according to embodiments of the disclosure.
FIG. 5 illustrates a structure of a UE according to embodiments of the disclosure.
FIG. 6 illustrates a structure of a network entity according to embodiments of the disclosure.

### [Best Mode for Carrying out the Invention]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system defined by 3GPP is called a "New Radio (NR) system".

The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discuss ion in the 5G communication systems.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

Hereinafter, the operation principle of embodiments according to the disclosure will be described in detail with reference to the accompanying drawings. The terms which will be described below are terms defined in consideration of the functions in the disclosure. They may be different according to users, intentions of the users, or customs, and therefore, the definitions of the terms should be made based on the contents throughout the specification.

In the disclosure, terms referring to network entities or network functions and entities of edge computing systems, terms referring to messages, terms referring to identification information, and the like are illustratively used for the sake of descriptive convenience. Therefore, the disclosure is not limited by the terms as used herein, and other terms referring to subjects having equivalent technical meanings may be used.

In the following description, the disclosure will be described using terms and names defined in the 5G system standards for the descriptive convenience, but the disclosure is not limited by these terms and names and may be applied in the same way to systems that conform other standards.

Hereinafter, exemplary embodiments of the disclosure will be described in detail with reference to the accompanying drawings. It should be noted that the following accompanying drawings are provided to help an understanding of the disclosure, and the contents of the disclosure are not limited to configurations or arrangements illustrated in the drawings. In addition, a detailed description of known functions or configurations that may make the subject matter of the disclosure unclear will be omitted. It should be noted that in the following description of the disclosure, only parts necessary for understanding operations according to various embodiments of the disclosure will be described, and descriptions of the other parts will be omitted so as not to make the subject matter of the disclosure unclear. Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, embodiments of the disclosure will be described with reference to the accompanying drawings.

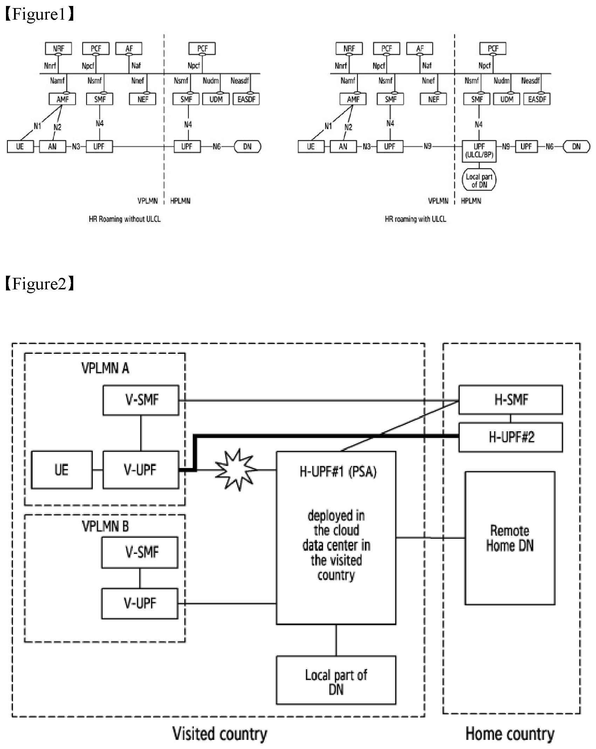

FIG. 1 is a diagram illustrating the architecture of a 5G wireless communication system supporting a roaming UE according to embodiments of the disclosure.

Referring to FIG. 1, a 5G system architecture supporting edge computing services may include various network functions (NFs), and FIG. 1 illustrates some of them such as an access and mobility management function (AMF), a session management function (SMF), a policy control function (PCF), a unified data management (UDM), a data network (DN) or a local part of the DN that enables local access to the data network, a user plane function (UPF), a (radio) access network ((R)AN), and a user equipment (UE).

Each NF may support the following functions.

The AMF provides functions for access and mobility management at the UE level, and each UE may be connected to one AMF by default.

The DN may represent an operator service, an Internet connection, or a third-party service. The DN may transmit downlink protocol data units (PDUs) to the UPF or receive, from the UPF, PDUs transmitted from the UE. The "local part of the DN" may represent a data network with a short data transmission path due to local access to the portion of the DN. The "local part of the DN" may be used to refer to a DN where edge application servers supporting edge computing services are deployed. The edge data network may refer to the data network where edge computing servers are deployed. The edge data network may be referred to as a local part of the data network (DN) or a local data network (DN).

The PCF receives information about packet flows from application servers and provides functions of determining policies such as mobility management and session management. Specifically, the PCF may support functions such as supporting a unified policy framework to control network operations, providing policy rules that enable control plane functions (e.g., AMF, SMF, etc.) to enforce policy rules, and implementing a front end to access relevant subscription information for policy decisions within the unified data repository (UDR).

The SMF provides session management functions, and when a UE has multiple sessions, the respective sessions may be managed by different SMFs.

The UDM may store user subscription data, policy data, etc.

The UPF may forward downlink PDUs received from the DN to the UE via the (R)AN, and forward uplink PDUs received from the UE via the (R)AN to the DN. The uplink classifier (ULCL) may refer to a UPF capable of classifying and transmitting uplink data. The local UPF (L-UPF) may serve as a termination point for sessions (PDU session anchor) transmitted to the local part of the DN. In a roaming scenario, the UPF of a visited public land mobile network (VPLMN) may be deployed within the VPLMN and perform uplink/downlink data transmission under the control of the V-SMF, and the UPF of a home public land mobile network (HPLMN) may perform uplink/downlink data transmission under the control of the H-SMF.

The edge application server discovery function (EASDF) processes domain name system (DNS) queries transmitted by the UE according to rules provided by the SMF. For example, the EASDF may forward a DNS query transmitted by the UE to a DNS server, receive a DNS response, transmit related reporting to the SMF, and provide the DNS response to the UE.

FIG. 2 is a diagram illustrating examples of user plane configuration and failure occurrence according to embodiments of the disclosure.

Referring to FIG. 2, one example of the scenarios considered in the disclosure is described.

An HPLMN operator may deploy a Home UPF (H-UPF) in a cloud that is located in a data center in the country visited by the roaming UE (visited country or the country of the VPLMN operator, hereinafter referred to as a roaming country) and provides services. The HPLMN operator may deploy the H-UPF in the cloud located in a data center in the country visited by the roaming UE and establish a connection with the V-UPF of the VPLMN where the roaming UE is registered, thereby configuring a user plane for providing roaming services. A plurality of VPLMN operators may exist in the country visited by the roaming UE. At any given point in time, a roaming UE may typically register with one of the VPLMNs and receive roaming services. During the roaming service, a user plane connection may be established between the selected V-UPF and the H-UPF deployed by the HPLMN operator in the roaming country. The H-UPF deployed in the roaming country may be controlled by an H-SMF located in the HPLMN country (home country or HPLMN country). The H-SMF may perform user plane configuration for the H-UPF (H-UPF#1 in FIG. 2) deployed in the roaming country and also perform user plane configuration for a separate H-UPF (H-UPF#2 in FIG. 2) within the HPLMN country. The HPLMN operator may use the H-SMF to provide services to the roaming UE via a short user plane path through H-UPF#1 deployed in the roaming country. A failure may occur on the user plane path via H-UPF#1. This user plane path failure may indicate a failure on the path between the network (V-UPF) of a specific VPLMN operator (VPLMN A in FIG. 2) and H-UPF#1. The HPLMN operator may detect a user plane path failure between H-UPF#1 and the V-UPF of a specific VPLMN operator, configure an alternate user plane path, and maintain roaming services. For example, the HPLMN operator may construct the user plane to bypass the failure occurrence path by configuring a user plane path using H-UPF#2 deployed in the HPLMN country, instead of H-UPF#1 deployed in the roaming country. The following specific embodiments will describe a method for detecting user plane path failure and ensuring session service continuity while bypassing the failure occurrence path.

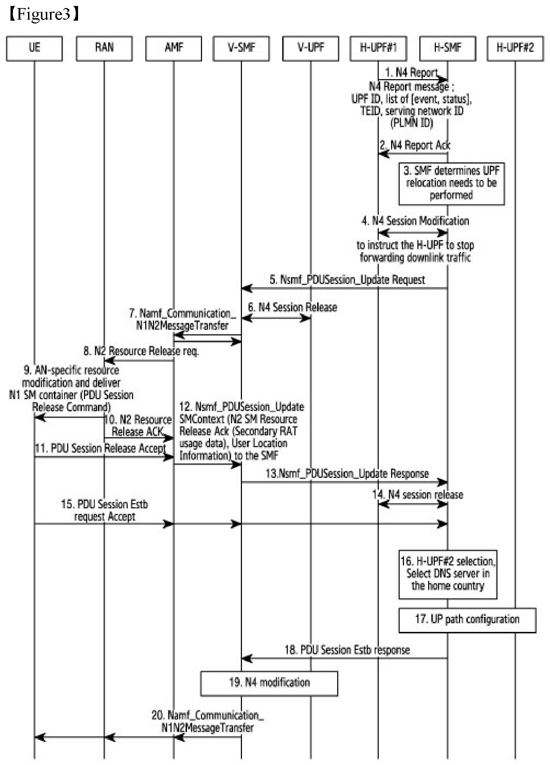

FIG. 3 is a diagram illustrating user plane configuration for an HR PDU session according to embodiments of the disclosure.

301. When the SMF supports session branching in the H-UPF through operations such as home session breakout for an HR PDU session, it may perform an operation of detecting a failure on the user plane path between the H-UPF performing the session branching and the V-UPF. The SMF may receive, from the H-UPF (H-UPF#1 in FIG. 3), a failure on the user plane path between the H-UPF and the V-UPF. When a failure occurs in a user plane connection (or N9 tunnel) connected to the V-UPF, H-UPF#1 may transmit an N4 report message to the H-SMF to notify that a failure has occurred. The message transmitted by H-UPF#1 to the H-SMF may include at least one of the following information: UPF ID, list of events (status), tunnel ID, serving network ID (or VPLMN ID), DNN, S-NSSAI, remote domain site failure flag (information indicating that a failure has occurred within the data center or region where the H-UPF is deployed), and/or roaming UP path failure flag (information indicating that a failure has occurred on a user plane path dedicated to roaming, for example, information indicating that a problem has occurred with a connection to a specific VPLMN or serving network). In addition, H-UPF#1 may determine whether the failure is a failure of H-UPF#1 or a failure of the path between the data center where H-UPF#1 is deployed (e.g., a public cloud data center) and the V-UPF, and report the same to the H-SMF. Based on this determination, H-UPF#1 may select the information to be included in the N4 report message transmitted to the H-SMF.

302. The H-SMF may transmit an acknowledgment of the N4 report received from H-UPF#1 to H-UPF#1.

303. Based on the information contained in the N4 report received from H-UPF#1, the H-SMF may detect that a user plane failure has occurred and analyze or determine information about the type of failure occurrence or the failure occurrence path (e.g., identifying and determining a specific serving network or VPLMN where the user plane path failure has occurred). For example, the H-SMF may use the VPLMN ID or serving network ID received from the H-UPF to identify the VPLMN or serving network to which the path where the user plane failure occurred is connected. Alternatively, the H-SMF may specify one of the user plane paths configured for roaming, based on information such as TE ID, UPF ID, DNN, or S-NSSAI. In addition, upon receiving a remote domain site failure flag, the H-SMF may determine that a connectivity failure has occurred within the region where the specific H-UPF is deployed. In addition, upon receiving a roaming UP path failure flag, the H-SMF may determine that a failure has occurred on the user plane for roaming services to the roaming partner network (or serving network, VPLMN) connected to the H-UPF.

The H-SMF may decide to exclude H-UPF#1 from the selection for future HR PDU session establishment requests for the corresponding VPLMN.

304. When the H-SMF determines that a specific type of failure has occurred on the user plane, the H-SMF may perform an UP path reconfiguration operation for associated PDU sessions. For example, in the case of a failure on the path between a public cloud data center where H-UPF #1 is deployed and a V-UPF, the H-SMF may perform an N4 session modification operation to reconfigure the UP path for currently created PDU sessions for the VPLMN on the UP path where the UP path failure event was detected. In addition, the H-SMF, based on SSC mode (SSC mode 1, SSC mode 2, or SSC mode 3) of the created PDU sessions, may determine whether to prioritize the release of existing PDU sessions. This embodiment may describe an operation for a PDU session in SSC mode 2. When the H-SMF determines that a failure is related to the path between the public cloud data center where H-UPF#1 is deployed and the V-UPF, the H-SMF may determine to establish a home-routed PDU session by selecting the H-UPF deployed in the HPLMN country (H-UPF#2 in FIG. 3) instead of selecting another H-UPF in the public cloud (e.g., the H-UPF deployed as a duplicate or redundant H-UPF in a data center in the roaming country, or the H-UPF deployed in the public cloud of the visited country to branch the UP path to a specific serving PLMN).

The H-SMF may perform the N4 session modification procedure to transmit a message indicating that downlink forwarding should be stopped to H-UPF#1.

305. The H-SMF may identify the path where the user plane failure occurred and specify the VPLMN, PDU session, and V-SMF corresponding to the identified path. The H-SMF may transmit a PDU session update request to the specified V-SMF. The PDU session update request message may include a PDU session release request indicator and PDU session release cause information (or a PDU session release cause code). When performing a release of an HR PDU session due to the occurrence of an UP path failure, the H-SMF may include a cause value indicating a PDU session re-establishment request in the message transmitted to the V-SMF. The H-SMF may also provide the V-SMF with an SM release PDU session command and protocol configuration options to be delivered to the UE.

306. The V-SMF may use the information received from the H-SMF to perform an N4 session release operation for the V-UPF.

307. The V-SMF may transmit, to the AMF, information for performing PDU session release and information received from the H-SMF (at least one of a PDU session release request indicator and PDU session release cause information, a PDU session release cause code, an SM release PDU session command, and a protocol configuration option).

308. The AMF may transmit, to the RAN, an N2 resource release request for the PDU session and information to be transmitted to the UE (PDU session release cause code, SM Release PDU session command, and/or protocol configuration option).

309. The RAN may transmit, to the UE, an AN-specific resource modification request message for the PDU session and information received from the AMF (at least one of a PDU session release cause code, an SM release PDU session command, and a protocol configuration option).

310. The RAN may transmit, to the AMF, an acknowledgment of the N2 resource release.

311. The AMF may receive a PDU session release accept message from the UE.

312. The AMF may transmit, to the V-SMF, an acknowledgment indicating the SM resource release result. The AMF may also transmit secondary RAT usage data, user location information, etc. to the V-SMF.

313. The V-SMF may transmit, to the H-SMF, a response message to the PDU session update request. The response message may include the result of the PDU session release operation.

314. The H-SMF may perform an N4 session release operation for H-UPF#1.

315. The UE may transmit a new PDU session establishment request, based on the PDU session command received in the previous step. The PDU session establishment request may be transmitted to the H-SMF via the AMF and the V-SMF. The V-SMF may select a V-UPF according to the PDU session establishment request received from AMF and provide information for user plane path configuration for the V-UPF to the H-SMF.

316. The H-SMF may select H-UPF#2 (an H-UPF located outside the area where the user plane path failure occurred and capable of connecting to the V-UPF) as the UPF for establishing the UP path, based on the PDU session establishment request received from the UE. The H-SMF may select a DNS server available in the area where H-UPF#2 is deployed, a DNS server available in the area deployed in the HPLMN country, or an H-EASDF available in the HPLMN country.

317. The H-SMF may perform an N4 session establishment procedure to configure the selected H-UPF#2 and configure H-UPF#2 so that a DNS query message may be sent to the DNS server or H-EASDF selected in the previous step. The H-SMF may obtain and determine the maximum transmission unit (MTU) information according to changes in the roaming user plane path. The H-SMF may obtain MTU information from the OAM or UPF, or use information configured internally in the H-SMF.

318. The H-SMF may transmit, to the V-SMF, a response message to the PDU session establishment request. This response message may include H-UPF#2, DNS server information (or H-EASDF information), and MTU information.

319. The V-SMF may perform configuration for the V-UPF using the information received from the H-SMF. The V-SMF may perform configuration for the V-UPF and establish a connection between the V-UPF and H-UPF#2.

320. The V-SMF may transmit a message to the AMF in order to forward information about the PDU session establishment to the RAN and the UE. This message may include information received from the H-SMF (DNS server information, H-EASDF information, or MTU information). The AMF transmits a PDU session establishment-related message to the RAN and the UE. The UE may transmit a DNS query message using the received DNS server or H-EASDF information. The UE may determine the single packet size to transmit using the received MTU information.

FIG. 3 illustrates an example of a procedure in which a UPF is reselected and a user plane of the HR PDU session is configured according to SSC mode 2 when a failure occurs on the home PDU session anchor UPF path connected to the V-UPF in the absence of an H-UPF serving as an uplink classifier or branch point (If the H-SMF receives from the H-UPF the UP Path failure report for the path between the H-UPF (PSA) and V-UPF, the H-SMF triggers the change of the corresponding SSC mode 2 H-UPF to immediately establish a new HR PDU Session, i.e., to support the roaming UE via ordinary HR PDU Session). The disclosure may include various embodiments in which the H-SMF triggers user plane reconfiguration according to SSC mode 2 when a failure occurs on the user plane path.

Although FIG. 3 describes a case in which the H-UPF, acting as an uplink classifier or branch point, is not used, the disclosure may include embodiments in which the H-SMF performs user plane reconfiguration due to the occurrence of a user plane failure when the H-UPF, acting as an uplink classifier or branch point, is used. For example, the H-SMF may perform an operation of removal of additional PDU session anchor and UL CL for HR-HSBO PDU session in response to UP Path failure, as follows. When H-UPF#1 connected to the V-UPF in FIG. 3 acts as an uplink classifier or branch point to support session branching (HR-HSBO) in HPLMN for the HR PDU session, the H-SMF may perform an operation of removing the uplink classifier and PDU session anchor H-UPF according to the detection of failure on the path of H-UPF#1 and V-UPF. (At the removal procedure, the H-SMF configures the UP path to support the roaming UE via HR PDU Session of which PSA is located in the home country and updates the DNS server information with replacing the H-EASDF or DNS server in the visited country with the DNS server in the home country)

In various embodiments of the disclosure, the H-SMF may perform a PDU session release and PDU session re-establishment trigger operation to respond to the UP path failure on the path between the H-UPF and the V-UPF (e.g., to receive an UP path failure report from the H-UPF and perform subsequent operations) on the HR PDU session configured in SSC mode 1 or SSC mode 2.

For example, the H-SMF may receive an UP path failure occurrence report from H-UPF #1 in operation 301 of FIG. 3 and perform a restoration operation for the UP path failure. At this time, the restoration operation of the H-SMF in response to the UP path failure may include an operation of determining to immediately delete the PDU session context for H-UPF #1 that transmitted the UP path failure report, or an operation of determining to maintain the PDU session context for a certain period of time, wait for recovery, and then delete it.

When the H-SMF determines to delete the PDU session context, the H-SMF may determine to perform a release on the corresponding HR PDU session and transmit a PDU session release request or command for the UE to the V-SMF. The V-SMF may transmit the PDU session release request or command received from the H-SMF to the AMF (see operation 307 in FIG. 3), and the AMF may transmit the corresponding message to the UE (see operations 308 and 309 in FIG. 3).

The PDU session release request or command transmitted by the H-SMF to the UE to respond to the UP path failure may include a cause value indicating a PDU session re-establishment request. For example, the H-SMF may receive an UP path failure report from H-UPF#1, determine PDU session release according to operator policy, and transmit a PDU session release request or command to the UE. When the PDU session release command received by the UE in operation 309 of FIG. 3 includes a cause value indicating PDU session re-establishment, the UE may immediately perform a new PDU session establishment operation.

In various embodiments of the disclosure, when the H-SMF receives an UP path failure report from an H-UPF constituting the established HR PDU session, the H-SMF may perform the following operations, depending on operator policy. For example, when the H-SMF receives, from an H-UPF deployed in the visited country or visited region where an HR PDU session was established, an UP path failure report for the path between the H-UPF and a V-UPF, the H-SMF may determine to re-establish the HR PDU session through a new H-UPF deployed in the home country or home region, and the H-SMF may perform a PDU session release including an operation of transmitting a PDU session release request or command, which includes a cause value requesting PDU session re-establishment, to the UE.

In an embodiment of the disclosure, when the H-SMF receives, from an H-UPF deployed in the home country or home region where an HR PDU session was established, an UP path failure report for a path between the H-UPF and a V-UPF, the H-SMF may determine to establish a new HR PDU session through a new H-UPF deployed in the visited country or visited region, and the H-SMF may perform PDU session release operations including an operation of transmitting a PDU session release request or command, including a cause value requesting PDU session re-establishment, to the UE.

The embodiment of the disclosure may effectively maintain roaming service quality by promptly responding to the occurrence of UP path failure through redundancy of a transmission path between one V-UPF and an H-UPF deployed in the home region and a transmission path between the V-UPF and an H-UPF deployed in the visited region.

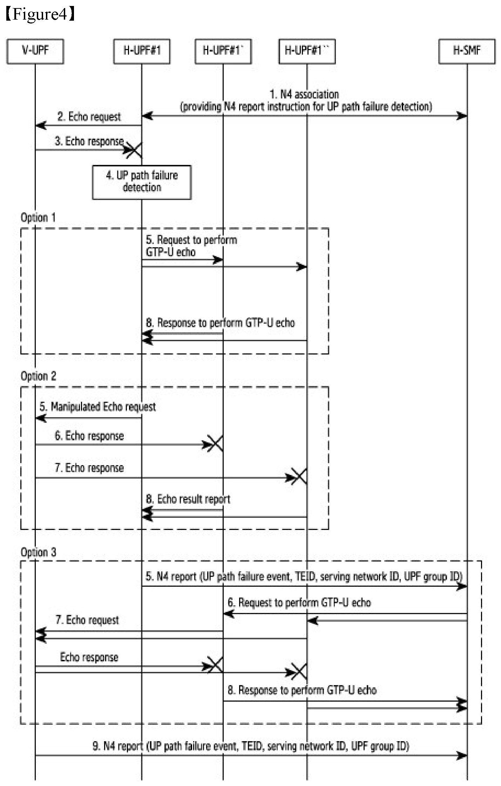

FIG. 4 is a diagram illustrating a method for detecting user plane failure occurrence according to embodiments of the disclosure.

401. The H-SMF may provide an N4 report instruction when performing N4 association or N4 session management operations with H-UPF#1. The N4 report instruction may include a request for reporting and a detection method in the event of a user plane failure. The H-SMF may instruct the H-UPF to report information about the serving network ID, PLMN ID, DNN, or S-NSSAI in the event of a user plane failure.

402. The H-UPF may transmit an echo request to a UPF that has a user plane path connected to the H-UPF. For example, H-UPF#1 may transmit an echo request to the V-UPF in order to detect a failure on the user plane path for roaming services.

403. A response to the echo request may not be received by H-UPF#1 due to a failure on the path between H-UPF#1 and the V-UPF.

404. When a response to the echo request is not received, H-UPF#1 may detect an UP path failure event. H-UPF#1 may perform operations to determine whether the user plane path failure is partial or whether a failure has occurred across all paths to the corresponding UPF in various ways as described below.

In the first option,
405. H-UPF#1 may request another H-UPF (e.g., H-UPF#1' and H-UPF#1'' in the diagram, a UPF connectable to the V-UPF, a UPF connected to the V-UPF, or a UPF deployed in the same data center) to perform a GTP-U echo. When H-UPF#1 requests a GTP-U echo, it may also provide target UPF information (e.g., identifier and address information of the V-UPF, and a tunnel ID).
406. The H-UPF (e.g., H-UPF#1', H-UPF#1", etc.) that receives the GTP-U echo request from H-UPF#1 may perform a GTP-U echo request to the V-UPF.
407. A response to the echo request transmitted by H-UPF#1' and H-UPF#1'' may not be received from the V-UPF.
408. H-UPF#1' and H-UPF#1'' may transmit, to H-UPF#1, the results of a failure to receive the echo response.

In the second option,
405. H-UPF#1 may transmit, to the V-UPF, an echo request to perform GTP-U echo on another H-UPF (e.g., H-UPF#1' and H-UPF#1'' in the diagram, a UPF connectable to the V-UPF, a UPF connected to the V-UPF, or a UPF deployed in the same data center). The echo request message may include information about H-UPF#1' and H-UPF#1'' (an address and identifier, and a tunnel ID).
406 to 407. H-UPF#1' and H-UPF#1" may not receive a GTP-U echo request for the V-UPF.
408. H-UPF#1' and H-UPF#1" may transmit, to H-UPF#1, the results of a failure to receive the echo response.

In the third option,
405. H-UPF#1 may transmit, to H-SMF, an N4 report message including information about a user plane path failure occurrence, tunnel ID (TE ID), serving network ID (or VPLMN ID), UPF ID, and UPF group ID.
406. H-SMF may transmit, to H-UPF#1' and H-UPF#1", a message requesting user plane failure detection for the V-UPF. The request message may include a GTP-U echo request indicator and V-UPF information (identifier and address information, tunnel ID, etc.).
407. H-UPF#1' and H-UPF#1" may transmit the corresponding echo request to the V-UPF in response to a GTP-U echo request. In addition, H-UPF#1' and H-UPF#1" may not receive a response to the corresponding echo request from the V-UPF.
408. H-UPF#1' and H-UPF#1" may transmit, to the H-SMF, the results of a failure to receive a response to the echo request. H-UPF#1' and H-UPF#1" may transmit a failure on the user plane path with the V-UPF to the H-SMF.

For embodiments of Option 1 and Option 2,
409. H-UPF#1 may transmit to the H-SMF, an N4 report message including information about a user plane path failure occurrence, tunnel ID (TE ID), serving network ID (or VPLMN ID), UPF ID, and UPF group ID.

For embodiments of Option 1 to Option 3,
410. The H-SMF may perform an operation to establish a UP path for the user plane path where a failure was detected through the preceding operations. The H-SMF may perform an operation to re-establish a user plane path for PDU sessions corresponding to the user plane path where a failure was detected. For example, the H-SMF may perform the procedure described in FIG. 3.

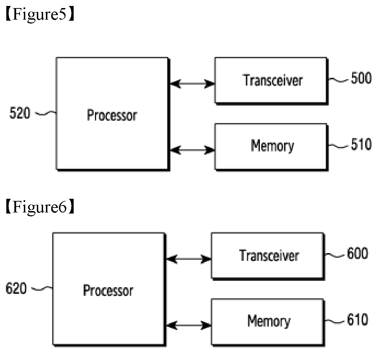

FIG. 5 illustrates a structure of a user equipment (UE) according to embodiments of the disclosure.

The UE according to an embodiment of the disclosure may include a processor 520 which controls the overall operation of the UE, a transceiver 500 which includes a transmitter and a receiver, and a memory 510. Of course, the example given above is not limiting, and the UE may include a smaller or larger number of components than the components illustrated in FIG. 5. The UE in FIG. 5 may correspond to the UE described n FIGS. 1 to 4.

According to embodiments of the disclosure, the transceiver 500 may transmit/receive signals with network entities or other UEs. The signals transmitted/received with network entities may include control information and data. In addition, the transceiver 500 may receive signals through a radio channel, output the same to the processor 520, and transmit signals output from the processor 520 through the radio channel.

According to embodiments of the disclosure, the processor 520 may control the UE to perform operations according to any one of the above-described embodiments. Of course, the processor 520, the memory 510, and the transceiver 500 are not necessarily implemented as separate modules, but may be implemented as a single component unit such as a single chip. Also, the processor 520 and the transceiver 500 may be electrically connected to each other. In addition, the processor 520 may be an application processor (AP), a communication processor (CP), a circuit, an application-specific circuit, or at least one processor.

According to embodiments of the disclosure, the memory 510 may store basic programs, application programs, and data, such as configuration information, for the operation of the UE. In particular, the memory 510 provides the stored data at the request of the processor 520. The memory 510 may include storage media such as a ROM, a RAM, a hard disk, a CD-ROM, and a DVD, or a combination of storage media. In addition, the memory 510 may include multiple memories. Furthermore, the processor 520 may perform the above-described embodiments of the disclosure, based on the programs for performing the embodiments, stored in the memory 510.

FIG. 6 illustrates a structure of a network entity according to embodiments of the disclosure.

The network entity according to embodiments of the disclosure may include a processor 620 which controls the overall operation of the network entity, a transceiver 600 which includes a transmitter and a receiver, and a memory 610. Of course, the example given above is not limiting, and the network entity may include a smaller or larger number of components than the components illustrated in FIG. 6. The network entity in FIG. 6 mat correspond to the network entities (e.g., H-SMF, H-UPF, V-SMF, V-UPF, RAN. etc.) described in FIGS. 1 to 4.

According to embodiments of the disclosure, the transceiver 600 may transmit/receive signals with at least one of other network entities or UEs. The signals transmitted/received with at least one of other network entities or UEs may include control information and data.

According to embodiments of the disclosure, the processor 620 may control the network entity to perform operations according to any one of the above-described embodiments. Of course, the processor 620, the memory 610, and the transceiver 600 are not necessarily implemented as separate modules, but may be implemented as a single component unit such as a single chip. Also, the processor 620 and the transceiver 600 may be electrically connected to each other. In addition, the processor 620 may be an application processor (AP), a communication processor (CP), a circuit, an application-specific circuit, or at least one processor.

According to embodiments of the disclosure, the memory 620 may store data such as basic programs for operations of the network entity, application programs, and configuration information. In particular, the memory 610 provides the stored data at the request of the processor 620. The memory 610 may include storage media such as a ROM, a RAM, a hard disk, a CD-ROM, and a DVD, or a combination of storage media. In addition, the memory 610 may include multiple memories. Furthermore, the processor 620 may perform the above-described embodiments of the disclosure, based on the programs for performing the embodiments, stored in the memory 610.

It should be noted that the above-described configuration diagrams, illustrative diagrams of control/data signal transmission methods, illustrative diagrams of operation procedures, and structural diagrams are not intended to limit the scope of the disclosure. That is, all the constituent elements, entities, or operation steps described in the embodiments of the disclosure should not be construed as being essential elements for the implementation of the disclosure, and even when including only some of the elements, the disclosure may be implemented without impairing the true of the disclosure. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, and LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a first session management function (SMF) entity belonging to a home public land mobile network (HPLMN) in a wireless communication system, the method comprising:
receiving, from a first user plane function (UPF) entity belonging to the HPLMN and deployed close to a visited region of a terminal, a first message for notifying of a failure of a user plane path between the first UPF and a second UPF entity belonging to a visited public land mobile network (VPLMN) in the visited region; and
transmitting, to a second SMF entity belonging to the VPLMN, a second message for requesting a release of a protocol data unit (PDU) session associated with the user plane path.

2. The method of claim 1, wherein the second message comprises a cause value indicating a PDU session re-establishment request.

3. The method of claim 1, further comprising:
receiving a third message for requesting establishment of a new PDU session; and
based on the third message, selecting a third UPF entity belonging to the HPLMN for establishing a new user plane path.

4. The method of claim 3, further comprising
selecting a domain name system (DNS) server associated with the third UPF entity.

5. The method of claim 1, wherein the first message is related to an N4 report message, and the second message comprises a PDU session release request message.

6. A method performed by a first user plane function (UPF) entity belonging to a home public land mobile network (HPLMN) and deployed close to a visited region of a terminal in a wireless communication system, the method comprising:
identifying a failure of a user plane path between the first UPF entity and a second UPF entity belonging to a visited public land mobile network (VPLMN) of the visited region of the terminal; and
transmitting, to a first session management function (SMF) entity belonging to the HPLMN, a first message for notifying of a failure of the user plane path.

7. The method of claim 6, wherein the first message comprises at least one of information for identifying the VPLMN and information for identifying the second UPF entity.

8. The method of claim 6, wherein the first message is related to an N4 report message.

9. A first session management function (SMF) entity belonging to a home public land mobile network (HPLMN) in a wireless communication system, the first SMF entity comprising:
a transceiver; and
a controller connected to the transceiver,
wherein the controller is configured to:
receive, from a first user plane function (UPF) entity belonging to the HPLMN and deployed close to a visited region of a terminal, a first message for notifying of a failure of a user plane path between the first UPF and a second UPF entity belonging to a visited public land mobile network (VPLMN) in the visited region; and
transmit, to a second SMF entity belonging to the VPLMN, a second message for requesting a release of a protocol data unit (PDU) session associated with the user plane path.

10. The first SMF entity of claim 9, wherein the second message comprises a cause value indicating a PDU session re-establishment request.

11. The first SMF entity of claim 9, wherein the controller is configured to:
receive a third message for requesting establishment of a new PDU session; and
select, based on the third message, a third UPF entity belonging to the HPLMN for establishing a new user plane path.

12. The first SMF entity of claim 9, wherein the controller is configured to
select a domain name system (DNS) server associated with the third UPF entity.

13. The first SMF entity of claim 9, wherein the first message is related to an N4 report message, and the second message comprises a PDU session release request message.

14. A first user plane function (UPF) entity belonging to a home public land mobile network (HPLMN) and deployed close to a visited region of a terminal in a wireless communication system, the first UPF entity comprising:
a transceiver; and
a controller connected to the transceiver,
wherein the controller is configured to:
identify a failure of a user plane path between the first UPF entity and a second UPF entity belonging to a visited public land mobile network (VPLMN) of the visited region of the terminal; and
transmit, to a first session management function (SMF) entity belonging to the HPLMN, a first message for notifying of a failure of the user plane path.

15. The first UPF entity of claim 14, wherein the first message comprises at least one of information for identifying the VPLMN and information for identifying the second UPF entity, and
wherein the first message is related to an N4 report message.
